# EUROPÄISCHE PATENTSCHRIFT

(11) **EP 4 324 725 B1**
(45) Veröffentlichungstag und Bekanntmachung des Hinweises auf die Patenterteilung: **01.10.2025**
(21) Anmeldenummer: 23176710.4
(22) Anmeldetag: 01.06.2023
(51) Int. Cl.: B62D 6/00

(54) **KRAFTFAHRZEUG MIT EINEM LENKMITTEL UND VERFAHREN ZUR BEREITSTELLUNG EINES RÜCKKOPPELDREHMOMENTS FÜR DAS LENKMITTEL**
MOTOR VEHICLE WITH A STEERING MEANS AND METHOD FOR PROVIDING A FEEDBACK TORQUE FOR THE STEERING MEANS
VÉHICULE AUTOMOBILE DOTÉ D'UN MOYEN DE DIRECTION ET PROCÉDÉ DE FOURNITURE D'UN COUPLE DE RÉTROACTION POUR LE MOYEN DE DIRECTION

(30) Priorität: 21.07.2022 DE 102022118311
(43) Veröffentlichungstag der Anmeldung: 21.02.2024
(73) Patentinhaber: AUDI AG, 85057 Ingolstadt (DE)
(72) Erfinder: Agostini, Johannes, 85084 Reichertshofen (DE); Cannon, Shane, 92339 Beilngries (DE)

(56) Entgegenhaltungen:
- DE-A1- 102016 207 435
- DE-A1- 102018 117 975
- DE-A1- 102018 204 582
- DE-A1- 102019 101 809
- DE-T5- 112020 004 023
- JP-A- 2021 115 937
- US-A1- 2004 148 078
- US-A1- 2015 329 142

## Beschreibung

Die Erfindung betrifft ein Kraftfahrzeug mit einem um eine Lenkachse drehbar gelagerten Lenkmittel, durch dessen Betätigung durch den Fahrer des Kraftfahrzeugs der Lenkwinkel wenigstens eines des Räder des Kraftfahrzeugs veränderbar ist, einem Rückkoppelaktor und einer Steuereinrichtung, wobei das Lenkmittel durch den Rückkoppelaktor mit einem Rückkoppeldrehmoment bezüglich der Lenkachse beaufschlagbar ist, wobei die Steuereinrichtung dazu eingerichtet ist, das Rückkoppeldrehmoment in Abhängigkeit von an die Steuereinrichtung bereitgestellten Rückkoppeldaten vorzugeben. Daneben betrifft die Erfindung ein Verfahren zur Bereitstellung eines Rückkoppeldrehmoments für ein um eine Lenkachse gelagertes Lenkmittel eines Kraftfahrzeugs.

Steer-by-Wire-Systeme, bei denen zwischen einem Lenkmittel, also insbesondere einem Lenkrad, und den gelenkten Rädern keine unmittelbare mechanische oder hydraulische Verbindung besteht, gewinnen zunehmend an Relevanz, da durch ihre Nutzung einerseits Bauraumersparnisse möglich sind und andererseits Zusatzfunktionen, beispielsweise eine Anpassung des Lenkgefühls an Fahrerwünsche beziehungsweise einen bestimmten Fahrmodus, zusätzliche Assistenzfunktionen etc., mit geringem Aufwand ermöglicht werden.

In vielen Anwendungsfällen ist alternativ auch eine Nutzung von heutzutage üblichen elektromechanischen Lenksystemen möglich bzw. zweckmäßig. Bei diesen besteht zwar eine mechanische Kopplung zwischen dem Lenkmittel und den gelenkten Rädern, durch einen Lenkaktor kann jedoch ein zusätzliches unterstützendes Lenkmoment aufgebracht werden. Auch hierbei können Zusatzfunktionen, beispielsweise eine Anpassung des Lenkgefühls an Fahrerwünsche beziehungsweise einen bestimmten Fahrmodus, zusätzliche Assistenzfunktionen etc., mit geringem Aufwand ermöglicht werden.

Als nachteilig gegenüber einer hydraulischen Lenkung wird bei Steer-by-Wire-Systemen teilweise empfunden, dass über ein solches Steer-by-Wire-System unter Umständen eine weniger exakte und schnelle Rückkopplung des Fahrzustandes beziehungsweise der Wechselwirkung der gelenkten Räder mit der Fahrbahn an den Fahrer möglich ist, als dies bei einer hydraulischen Lenkung der Fall wäre. Dies wird insbesondere dann als nachteilig empfunden, wenn ein sportliches Fahren beziehungsweise ein Fahren im Grenzbereich gewünscht beziehungsweise notwendig ist.

Trotz der mechanischen Kopplung zwischen Lenkmitteln und Rädern kann diese Problematik auch bei elektromechanischen Lenksystemen relevant sein. So sind bei diesen Systemen in der Regel gewisse Abweichungen zwischen dem am Lenkmittel und für die gelenkten Räder eingestellten Lenkwinkel möglich, z.B. aufgrund eines Torsionsstabs im Lenkmomentpfad. Dieser Lenkwinkelunterschied kann beispielsweise sensorisch erfasst und ausgewertet werden, um eine geeignete Lenkunterstützung durch den Lenkaktor zu erreichen. Dies kann dazu führen, dass Kraft- bzw. Momenteinträge an den Rädern über den mechanischen Kopplungspfad nicht in hinreichendem Maß zum Lenkmittel übertragen werden, sodass es zweckmäßig sein kann, ähnlich wie bei Steer-by-Wire-Systemen eine aktorische Rückkopplung am Lenkmittel vorzusehen, die, wie obig erläutert, teils als eher wenig exakt und schnell empfunden wird.

Bei herkömmlichen Steer-by-Wire-Systemen bzw. elektromechanischen Lenksystemen werden als Eingangsdaten für eine Momentrückmeldung an den Fahrer über das Lenkmittel primär Daten von Lenkwinkelsensoren des Fahrzeugs genutzt. Durch die Trägheit der Räder und der Lenkmechanik können hierbei Wechselwirkungen mit der Fahrbahn, beispielsweise ein 3 Überfahren einer Unebenheit, zum Teil erst mit einer gewissen Verzögerung an den Fahrer kommuniziert werden und die genannten Faktoren führen zudem zu einer Bedämpfung von hochfrequenten Kraft- bzw. Momenteinträgen beziehungsweise von scharfen Transienten der in die Räder eingekoppelten Kräfte beziehungsweise Drehmomente.

Aus der Druckschrift US 11 262 737 B2 ist es bekannt, ein haptisches Feedback auf Basis von Sensordaten bereitzustellen. Es können beispielsweise Sensoren genutzt werden, die an Komponenten der Lenkung angeordnet sind.

Die Druckschrift DE 10 2016 122 843 A1 schlägt vor, Schwingungen in einem Lenksystem dadurch zu reduzieren, dass Schwingungen des Bauteils mit einem Sensor, insbesondere mit einem Mikrofon, erfasst werden und ein Elektromotor zur Verstellung des Bauteils zum Bedämpfen der Schwingungen angesteuert wird.

Das Dokument US2004/148078 A1 offenbart ein Kraftfahrzeug gemäß dem Oberbegriff des Anspruchs 1.

Der Erfindung liegt somit die Aufgabe zu Grunde, die Rückkopplung des Fahrzustandes beziehungsweise der Wechselwirkung zwischen Rad und Fahrbahn an den Fahrer, insbesondere bei einer Nutzung eines Steer-by-Wire-Systems oder einer elektromechanischem Lenkung, weiter zu verbessern.

Die Aufgabe wird erfindungsgemäß durch ein Kraftfahrzeug der eingangs genannten Art gelöst, wobei die Rückkoppeldaten Radsensordaten wenigstens eines jeweiligen in oder an wenigstens einem der Räder angeordneten Radsensors des Kraftfahrzeugs und/oder in Abhängigkeit der Radsensordaten ermittelte Verarbeitungsdaten sind oder umfassen, wobei der jeweilige Radsensor dazu eingerichtet ist, eine Verformung zumindest eines Abschnitts eines eine Felge des jeweiligen Rades umgreifenden Reifens und/oder eine Kraft, die auf eine zur Kontaktierung der Fahrbahn dienende Lauffläche des Reifens wirkt, zu erfassen und wobei zur Ermittlung der Rückkoppeldaten mehrere Radsensoren in Umfangsrichtung des jeweilen Rads genutzt werden.

Der Erfindung liegt die Idee zu Grunde Kraft-bzw. Momenteinwirkungen auf ein gelenktes Rad einerseits deutlich näher an der Fahrbahn zu erfassen, als dies durch eine Überwachung des Radlenkwinkels möglich wäre, indem der Radsensor verwendet wird, um mögliche Kraftbeziehungsweise Drehmomenteinträge in die Räder prädizieren zu können. Durch das beschriebene Vorgehen können einerseits die eingangs erläuterten Verzögerungen durch die mechanische Trägheit der Lenkung vermieden werden und andererseits auch hochfrequente Kraft- beziehungsweise Drehmomenteinträge mit guter Genauigkeit an den Fahrer rückgekoppelt werden. Hierbei ist es insbesondere möglich, dass die Radsensordaten beziehungsweise Fahrbahnsensordaten primär dazu genutzt werden, einen hochfrequenten Anteil des Rückkoppeldrehmoments vorzugeben, der beispielsweise scharfe Momenttransienten beziehungsweise hochfrequent veränderliche Momente aufgrund von Fahrbahnunebenheiten an den Fahrer kommuniziert, während niederfrequente Momentanteile, beispielsweise ein Zentriermoment aufgrund eines Nachlaufs bzw. Gegenmomente, die eine Reibung der Lenkung simulieren, auf Basis üblicher Eingangsdaten, also insbesondere auf Basis von Daten eines Lenkwinkelsensors, vorgegeben werden.

Ein jeweiliger Radsensor kann insbesondere in bzw. an dem wenigstens einen Rad des Kraftfahrzeugs vorgesehen sein, dessen Lenkwinkel durch das Lenkmittel veränderbar ist. Somit können insbesondere Kräfte beziehungsweise Drehmomente an gelenkten Rädern mit geringer Latenz und hoher Genauigkeit über den jeweiligen Radsensor erfasst werden. Ergänzend oder alternativ ist es jedoch auch möglich, wenigstens einen Radsensor in bzw. an einem nicht gelenkten Rad zu nutzen, der beispielsweise dazu dienen kann zwischen verschiedenen Fahrbahnbelägen, beispielsweise zwischen einer Fahrt auf glattem Asphalt und auf Schotter zu unterscheiden.

Der Fahrbahnsensor kann insbesondere Informationen über vorausliegende Fahrbahnabschnitte sammeln und somit zukünftig voraussichtlich auf ein Rad wirkenden Kräfte beziehungsweise Drehmomente prognostizieren. Der Fahrbahnsensor kann derart an dem Kraftfahrzeug angeordnet und ausgebildet sein, dass der durch ihn erfasste Abschnitt der durch das Kraftfahrzeug befahrenen Fahrbahn zumindest zum Teil vor dem Kraftfahrzeug liegt. Hierbei kann es zwar, insbesondere für bildgebende Fahrbahnsensoren, möglich sein, dass die Verarbeitung der Fahrbahnsensordaten eine gewisse Zeit in Anspruch nimmt, beispielsweise einige 10ms, da jedoch Fahrbahnunebenheiten und andere Fahrbahnmerkmale, die zu Kraft- beziehungsweise Momenteinträgen am Rad führen können, bereits deutlich vor einem Kontakt des Rades mit dem entsprechenden Fahrbahnmerkmal erfasst werden können, kann die Momentrückkopplung über das Lenkmittel ohne Verzögerung zum abgeschätzten Kontaktzeitpunkt erfolgen.

Im einfachsten Fall werden die Radsensordaten und/oder die Fahrbahnsensordaten unmittelbar der das Rückkoppeldrehmoment vorgebenden Steuereinrichtung zugeführt. Es kann jedoch auch vorteilhaft sein, eine separate Vorverarbeitung von zumindest Teilen dieser Daten durch eine separate Verarbeitungseinrichtung durchzuführen, sodass die oben genannten Verarbeitungsdaten an die Steuereinrichtung bereitgestellt werden können. Dies kann beispielsweise vorteilhaft sein, um Standardhardware zur Bildverarbeitung zu nutzen oder Ähnliches.

Die erläuterte Bereitstellung eines Rückkoppeldrehmoments kann prinzipiell auch bei einer hydraulischen Lenkung genutzt werden, um beispielsweise die Genauigkeit der Momentrückkopplung an den Fahrer weiter zu erhöhen beziehungsweise dessen Vorlieben anpassen zu können. Das erläuterte Vorgehen ist jedoch besonders vorteilhaft, wenn keine direkte mechanische oder hydraulische Kopplung zwischen Lenkmittel und Rad vorhanden ist, also insbesondere bei den eingangs erläuterten Steer-by-Wire-Systemen, bzw. wenn diese Kopplung gewisse Lenkwinkelunterschiede bzw. ein gewisses Spiel zwischen Lenkmittel und Rad zulässt, wie dies bei elektromechanischen Lenkungen in der Regel der Fall ist.

Beispielsweise kann das Kraftfahrzeug wenigstens einen Lenkaktor, durch den ein Lenkwinkel wenigstens eines Rades des Kraftfahrzeugs veränderbar ist bzw. durch den ein zusätzliches Lenkmoment aufbringbar ist, und die oder eine weitere Steuereinrichtung zur Ansteuerung des Lenkaktors in Abhängigkeit eines Soll-Lenkwinkels, der von Ausgangsdaten eines mit dem Lenkmittel gekoppelten Lenkmittelsensors abhängt, umfassen. Steer-by-Wire-Systeme und elektromechanische Lenkungen in Kraftfahrzeugen sind an sich bekannt und sollen daher nicht im Detail erläutert werden.

Der Radsensor wird erfindungsgemäß dazu eingerichtet eine Verformung zumindest eines Abschnitts eines eine Felge des jeweiligen Rades umgreifenden Reifens und/oder eine Kraft, die auf eine zur Kontaktierung der Fahrbahn dienende Lauffläche des Reifens wirkt, zu erfassen. Ergänzend oder alternativ kann es jedoch auch zweckmäßig sein, eine Kraft auf wenigstens eine Seitenwand des Reifens zu erfassen. Die erfasste Verformung kann insbesondere eine Änderung der Krümmung der Lauffläche beziehungsweise eines jeweiligen Abschnitts der Lauffläche beziehungsweise eine Scherung des Reifenmaterials sein, wodurch Unebenheiten und hieraus resultierende Kräfte schnell und mit hoher Genauigkeit erfasst werden können.

Alternativ oder ergänzend können Kräfte auf den Reifen beziehungsweise dessen Lauffläche beziehungsweise Verformungen des Reifens indirekt über einen Drucksensor, der den Luftdruck im Reifen erfasst, erfasst werden. Dies kann zu einem besonders geringen Implementierungsaufwand führen, da eine Überwachung des Luftdrucks im Reifen in einigen Fahrzeugen ohnehin erfolgt. Gegenüber einer unmittelbaren Erfassung von Verformungen beziehungsweise Kräften, für die im Folgenden noch eine besonders vorteilhafte Möglichkeit erläutert werden wird, kann eine Überwachung des Luftdrucks im Reifen jedoch aufgrund der hierbei resultierenden Dämpfung zu einer Verschmierung von Transienten beziehungsweise einer Bedämpfung von Hochfrequenzanteilen der auf den Reifen wirkenden Kräfte beziehungsweise Drehmomente und somit zu einer weniger detaillierten Rückkopplung des Fahrzustands an den Fahrer führen.

Der Radsensor kann ein piezoelektrischer Sensor sein, der in eine zur Kontaktierung der Fahrbahn dienende radiale Außenwand des oder eines die oder eine Felge des jeweiligen Rades umlaufenden Reifens eingebettet ist oder an deren Innenfläche angeordnet ist. Die Außenfläche der Außenwand kann insbesondere die Lauffläche bilden. Kräfte beziehungsweise Verformungen im Wesentlichen senkrecht zur Außenwand können den piezoelektrischen Sensor komprimieren, wodurch an diesem eine Spannung abfällt, wodurch eine solche Krafteinwirkung beziehungsweise Verformung schnell und mit hoher Genauigkeit erfasst werden kann.

Ergänzend oder alternativ kann ein piezoelektrischer Sensor genutzt werden, der bei einem Scheren der piezoelektrischen Materials entsprechende Ausgangsspannungen bereitstellt, wodurch beispielsweise auch Scherungen des Reifenmaterials gut erkannt und erfasst werden können.

Indem beispielsweise in Axialrichtung des Rads beziehungsweise Reifens mehrere entsprechende Sensorelemente genutzt werden, kann schnell und genau erfasst werden, ob Kräfte an der Radinnenseite beziehungsweise Radaußenseite wirken und erfindungsgemäß durch Nutzung von mehreren Sensoren in Umfangsrichtung kann bei bekannter Radstellung auch zwischen Kräften an der Radvorder- und -rückseite unterschieden werden, sodass ein aus dem entsprechenden Krafteintrag resultierendes Drehmoment auf das Rad mit guter Genauigkeit ermittelt werden kann.

Das Kraftfahrzeug kann ein Mikrofon umfassen, dass insbesondere zur Erfassung eines Laufgeräusches wenigstens eines der Räder geeignet angeordnet und eingerichtet ist, wobei die Rückkoppeldaten zusätzlich ein durch das Mikrofon erfasstes Audiosignal oder Abhängigkeit des Audiosignals ermittelte weitere Verarbeitungsdaten umfassen und/oder wobei die Verarbeitungsdaten zusätzlich von dem Audiosignal abhängen. Auf Basis des Audiosignals beziehungsweise mithilfe des Mikrofons können insbesondere Vibrationen des Rades, die aufgrund einer rauen Fahrbahnoberfläche oder Ähnlichem resultieren können und bei einer mechanischen oder hydraulischen Lenkung auf das Lenkrad übertragen werden würden, gut erkannt werden. Da es sich bei solchen Vibrationen um eine quasikontinuierliche Störung handelt, ist es hierbei nicht erforderlich, einzelne Krafteinträge separieren zu können, sondern es ist zur Sicherstellung eines geeigneten Fahrgefühls hinreichend, beispielswiese ein rauschartiges Zusatzsignal, dessen Frequenzzusammensetzung in Abhängigkeit des Audiosignals gewählt wird, als zusätzliches Rückkoppeldrehmoment in das Lenkmittel einzukoppeln.

Während entsprechende Vibrationen am Lenkmittel zwar zusätzliche Informationen über einen befahrenen Untergrund geben können, werden sie von Fahrern jedoch zum Teil als komfortmindernd beurteilt. Insbesondere bezüglich der Berücksichtigung des Audiosignals, jedoch auch bezüglich der Berücksichtigung anderer Eingangsgrößen beziehungsweise der aus den jeweiligen Eingangsgrößen resultierenden Rückkoppeldrehmomente, ist es daher möglich, dass diese in Abhängigkeit eines gewählten Fahrmodus modifiziert, beispielsweise gefiltert, beziehungsweise skaliert werden. Beispielsweise können in einem Sportmodus Vibrationen und Momentschläge im Wesentlichen ungedämpft auf das Lenkmittel übertragen werden, während in einem Komfortmodus eine Glättung beziehungsweise Bedämpfung erfolgen kann.

Der Fahrbahnsensor kann einerseits ein bildgebender Sensor sein, durch den den Abschnitt der Fahrbahn abbildende Bilddaten bereitgestellt werden, und/oder andererseits wenigstens eine Tiefeninformation bezüglich des abgebildeten Abschnitts der Fahrbahn bereitstellen, wobei die Fahrbahnsensordaten die Bilddaten und/oder die Tiefeninformation umfassen oder von den Bilddaten und/oder der Tiefeninformation abhängen. Besonders bevorzugt wird für jeden Bildpunkt der Bilddaten eine Tiefeninformation bereitgestellt. Dies kann beispielsweise durch Nutzung einer Time-of-Flight-Kamera erreicht werden.

Alternativ wäre es auch möglich, die Tiefeninformation geringer aufzulösen als die Bilddaten, beispielsweise indem separate Erfassungsmittel, zum Beispiel eine Kamera und ein Radarsensor, genutzt werden. Bilddaten und Tiefeninformationen sind besonders geeignet, Fahrbahnunebenheiten, beispielsweise Schlaglöcher, auf der Fahrbahn liegende Steine oder andere Gegenstände und Ähnliches zu erkennen und zu lokalisieren. Entsprechende Unebenheiten können zu einer deutlichen Momentbeaufschlagung der gelenkten Räder führen und sollten somit über das Lenkmittel an den Fahrer rückgekoppelt werden.

Die Steuereinrichtung oder eine die Verarbeitungsdaten bereitstellende Verarbeitungseinrichtung des Kraftfahrzeugs kann dazu eingerichtet sein, durch Auswertung der Bilddaten und/oder der Tiefeninformation wenigstens ein Fahrbahnmerkmal, insbesondere eine Unebenheit, der Fahrbahn zu erkennen und seine Position bezüglich wenigstens eines der Räder zu ermitteln, wobei der zeitliche Verlauf des Rückkoppeldrehmoments von der ermittelten Position abhängt. Insbesondere kann prädiziert werden, ob ein Rad beziehungsweise welches Rad voraussichtlich das Fahrbahnmerkmal kontaktieren wird beziehungsweise welcher Teil des Rades das Fahrbahnmerkmal voraussichtlich kontaktieren wird.

Somit kann einerseits der Zeitpunkt eines Ausspielens eines dem Fahrbahnmerkmal zugeordneten Rückkoppeldrehmomentverlaufs von einem prognostizierten Kontaktzeitpunkt abhängen, der in Abhängigkeit der Position und weiterer Parameter, beispielsweise der Fahrzeuggeschwindigkeit und optional des Lenkwinkels, ermittelt werden kann. Andererseits kann die konkrete Form des ausgespielten Rückkoppeldrehmomentverlauf davon abhängen, welche Teile des Rades die Unebenheit kontaktiert, also beispielsweise ob die Innen- oder Außenseite beziehungsweise Vorder- oder Rückseite des jeweiligen Rades die Unebenheit kontaktiert.

Der Fahrbahnsensor kann insbesondere eine Kamera, insbesondere eine Time-Off-Flight-Kamera und/oder eine Infrarotkamera, oder ein Laserscanner oder ein Radarsensor oder ein Ultraschallsensor sein. Das Kraftfahrzeug kann auch mehrere der genannten Sensortypen als Fahrbahnsensor umfassen, wobei die Sensordaten der verschiedenen Fahrbahnsensoren separat an die Steuereinrichtung bereitgestellt werden können oder beispielsweise durch eine Sensordatenfusion fusioniert werden können, um beispielsweise ein dreidimensionales Fahrbahnmodell der vorausliegenden Fahrbahn zu erzeugen oder Ähnliches.

Das Kraftfahrzeug kann ein Lenkwinkelsensor zur Erfassung von den Lenkwinkel wenigstens eines der Räder betreffenden Lenkwinkeldaten und/oder einen Federungssensor zur Erfassung wenigstens eines Parameters der Federung, insbesondere eines Höhenstandes der Federung, und/oder einen Beschleunigungssensor zur Erfassung einer Beschleunigung des Kraftfahrzeugs umfassen, wobei die Rückkoppeldaten die Lenkwinkeldaten und/oder den Parameter der Federung und/oder die Beschleunigung des Kraftfahrzeugs und/oder von den Lenkwinkeldaten und/oder dem Parameter der Federung und/oder der Beschleunigung des Kraftfahrzeugs abhängende weitere Verarbeitungsdaten umfassen und/oder wobei die Verarbeitungsdaten von den Lenkwinkeldaten und/oder dem Parameter der Federung und/oder der Beschleunigung des Kraftfahrzeugs abhängen.

Die Auswertung von Lenkwinkeldaten eines Lenksensors zur Rückkopplung von Lenkinformation an den Fahrer ist an sich wohlbekannt. Wie bereits einleitend erläutert wurde, ist diese auch gut zur Momentrückkopplung bezüglich langsam veränderlicher Momente an den Rädern geeignet und kann beispielsweise für diesen Zweck weiterhin im erfindungsgemäßen Kraftfahrzeug genutzt werden. Die Schwächen der Momentrückkopplung auf Basis der Lenkwinkeldaten werden durch die obig erläuterten zusätzlichen Eingangsgrößen, also insbesondere durch Auswertung der Radsensordaten, der Fahrbahnsensordaten und/oder des Audiosignals im Wesentlichen vollständig vermieden, sodass insgesamt eine verbesserte Momentrückkopplung erfolgen kann.

Ein Parameter der Federung, insbesondere der Höhenstand der Federung, also insbesondere inwieweit ein Rad in Richtung des Fahrwerks eingefedert ist, kann ausgewertet werden, um Kräfte an einzelnen Rädern oder Gruppen von Rädern, beispielsweise aufgrund von Unebenheiten, zu erkennen. Der Parameter kann somit alternativ zu den Radsensordaten oder Redundant hierzu ausgewertet werden. Bevorzugt kann der Parameter der Federung jedoch ausgewertet werden, um Lenkmomente aufgrund von Radlaständerungen, beispielsweise aufgrund von Belastungszuständen beim Wanken beziehungsweise Nicken der Karosserie, bei der Momentrückkopplung über das Lenkmittel zu berücksichtigen. Beispielsweise kann ein Nicken des Kraftfahrzeugs aufgrund eines Beschleunigungs- beziehungsweise Bremsvorgang die Räder der gelenkten Achse zusätzlich be- beziehungsweise entlasten und somit den Lenkwiderstand steigern oder senken.

Die Beschleunigung des Kraftfahrzeugs kann beispielsweise auch ausgewertet werden, um ein Wanken beziehungsweise Nicken des Kraftfahrzeugs prädizieren zu können, wenn geeignete Parameter der Federung nicht bekannt sind. Ergänzend oder alternativ kann die Beschleunigung beispielsweise ausgewertet werden, um einen Schwimmwinkel des Kraftfahrzeugs abzuschätzen beziehungsweise, beispielsweise in Verbindung mit bekannten Raddrehzahlen, den Schlupf an den gelenkten Rädern abzuschätzen. Entsprechende Größen führen wiederum zu Drehmomenten an den Rädern, die über das Lenkmittel an den Fahrer rückgekoppelt werden können.

Das Kraftfahrzeug kann wenigstens ein Fahrerassistenzsystem, insbesondere eine elektronische Stabilitätskontrolle, umfassen, wobei die Rückkoppeldaten wenigstens eine durch eine Komponente des Fahrerassistenzsystems bereitgestellte Assistenzinformation, die insbesondere einen Schwimmwinkel des Kraftfahrzeugs und/oder einen Schlupf wenigstens eines Rades des Kraftfahrzeugs betrifft, und/oder von der Assistenzinformation abhängende weitere Verarbeitungsdaten umfassen, und/oder wobei die Verarbeitungsdaten von der Assistenzfunktion abhängen. Die weiteren Verarbeitungsdaten können die gleichen weiteren Verarbeitungsdaten sein, wie sie obig bezüglich der Lenkwinkeldaten, des Parameters der Federung beziehungsweise der Beschleunigung des Kraftfahrzeugs erläutert wurden. Es kann sich jedoch auch um zusätzliche weitere Verarbeitungsdaten handeln oder es können keine Verarbeitungsdaten genutzt werden, die von den Lenkwinkeldaten, dem Parameter der Federung beziehungsweise der Beschleunigung abhängen.

Die Komponente des Fahrerassistenzsystems kann insbesondere eine Steuer- beziehungsweise Verarbeitungseinrichtung sein, die das Fahrerassistenzsystem implementiert beziehungsweise im Rahmen des Fahrerassistenzsystems Daten verarbeitet. In diesem Fall kann beispielsweise unmittelbar ein Schwimmwinkel beziehungsweise ein Schlupf als Assistenzinformation bereitgestellt werden. Bei der Komponente kann es sich jedoch auch um einen einzelnen Sensor oder eine Gruppe von Sensoren des Fahrerassistenzsystems handeln. Beispielsweise können Raddrehzahlen ausgewertet werden, die durch Raddrehzahlsensoren einer Schlupfregelung bereitgestellt werden.

Durch Auswertung einer Assistenzinformation können Informationen berücksichtigt werden, die einen Einfluss auf Momente an gelenkten Rädern des Kraftfahrzeugs haben können und die somit vorteilhaft bei der Momentrücckopplung über das Lenkmittel berücksichtigt werden können. Da entsprechende Größen jedoch ohnehin erfasst beziehungsweise im Rahmen des Fahrerassistenzsystems bereitgestellt oder verarbeitet werden, ist für diese weitere Verbesserung der Momentrückkopplung im Wesentlichen kein zusätzlicher Hardwareaufwand erforderlich.

Die Steuereinrichtung oder eine jeweilige Teileinrichtung der Steuereinrichtung kann dazu eingerichtet sein, ein erstes Teilmoment in Abhängigkeit der Radsensordaten und/oder der Fahrbahnsensordaten und/oder der in Abhängigkeit der Radsensordaten und/oder der Fahrbahnsensordaten ermittelten Verarbeitungsdaten und ein zweites Teilmoment in Abhängigkeit einer durch eine weitere Fahrzeugkomponente bereitgestellten Zusatzinformation zu ermitteln, wobei die Steuereinrichtung dazu eingerichtet sein kann, das Rücckoppeldrehmoment als Summe des, insbesondere gefilterten, ersten Teilmoments und des, insbesondere gefilterten, zweiten Teilmoments vorzugeben. Es können somit zwei Rückkoppelpfade für das Rückkoppeldrehmoment am Lenkmittel bereitgestellt werden, deren Momentvorgaben addiert beziehungsweise nach einer Filterung eines oder beider der Teilmomente addiert werden. Insbesondere können diese beiden Rückkoppelpfade unterschiedlich schnell reagieren, also beispielsweise unterschiedliche Latenzen und/oder unterschiedliche Bandbreiten für die Rückkoppelsignale aufweisen.

Wie bereits erläutert wurde, ermöglichen beispielsweise Lenkwinkelsensoren in der Regel nur eine relativ träge Momentrückkopplung, weshalb sie als Zusatzinformation berücksichtigt werden können. Das Gleiche gilt typischerweise auch für den Parameter der Federung, die Beschleunigung des Kraftfahrzeugs und die Assistenzinformation, da diese Größen relativ stark von einer Bedämpfung von Kraft- beziehungsweise Momenteinträgen am Rad durch die Trägheit des Fahrwerks des Kraftfahrzeugs betroffen sind. Da somit ohnehin nur eine relativ niederfrequente Momentrückkopplung bezüglich dieser Größen erfolgen kann, kann es vorteilhaft sein, das zweite Teilmoment durch einen Tiefpassfilter zu filtern, beispielsweise um Artefakte aufgrund einer niedrigen Abtastrate bestimmter Größen oder andere Störungen, die sich nicht tatsächlich aus dem Fahrbetrieb ergeben, zu vermeiden.

Wie obig bereits im Detail erläutert wurde, erlauben die Radsensordaten beziehungsweise die Fahrbahnsensordaten eine Momentrückkopplung mit erheblich geringerer Latenz, schärferen Transienten und mit höheren Frequenzen der Momentänderung. Daher kann es zweckmäßig sein, die Momentrückkopplung auf Basis dieser Eingangsgrößen und insbesondere auch des Audiosignals über einen separaten, parallelen Rückkopplungspfad zu führen.

Unter Umständen kann es vorteilhaft sein, für diesen schnellen Rückkopplungspfad eine Hochpassfilterung durchzuführen, da beispielsweise in Reifenmänteln angeordnete Piezosensoren je nach Fülldruck des Reifens, Temperatur etc., Offset-Spannungen aufweisen können, die zu konstanten beziehungsweise sehr niederfrequenten fehlerhaften Beiträgen im ersten Teilmoment führen können. Dies kann durch eine Hochpassfilterung bei niederen Frequenzen, beispielsweise bei weniger als 5 Hz oder weniger als 1 Hz, vermieden werden.

Neben dem erfindungsgemäßen Kraftfahrzeug betrifft die Erfindung ein Verfahren zur Bereitstellung eines Rückkoppeldrehmoments für ein um eine Lenkachse drehbar gelagertes Lenkmittel eines Kraftfahrzeugs, wobei durch Betätigung des Lenkmittels durch den Fahrer des Kraftfahrzeugs der Lenkwinkel wenigstens eines der Räder des Kraftfahrzeugs verändert wird, wobei das Lenkmittel durch einen Rückkoppelaktor des Kraftfahrzeugs mit einem Rückkoppeldrehmoment bezüglich der Lenkachse beaufschlagt wird, wobei das Rückkoppeldrehmoment in Abhängigkeit von Rückkoppeldaten vorgegeben wird, wobei die Rückkoppeldaten Radsensordaten wenigstens eines jeweiligen in oder an wenigstens einem der Räder angeordneten Radsensors des Kraftfahrzeugs und/oder Fahrbahnsensordaten wenigstens eines Fahrbahnsensors des Kraftfahrzeugs, der zur kontaktlosen Erfassung eines Abschnitts der durch das Kraftfahrzeug befahrenen Fahrbahn eingerichtet ist, und/oder in Abhängigkeit der Radsensordaten und/oder der Fahrbahnsensordaten ermittelte Verarbeitungsdaten sind oder umfassen.

Das erfindungsgemäße Verfahren kann insbesondere durch das erfindungsgemäße Kraftfahrzeug implementiert werden beziehungsweise das erfindungsgemäße Kraftfahrzeug kann zur Durchführung des erfindungsgemäßen Verfahrens verwendet werden. Unabhängig davon können zum erfindungsgemäßen Kraftfahrzeug erläuterte Merkmale mit den dort genannten Vorteilen auf das erfindungsgemäße Verfahren übertragen werden und umgekehrt.

Zur Implementierung der Ermittlungs- beziehungsweise Verarbeitungs- beziehungsweise Steuerschritte des Verfahrens kann, wie obig zum Kraftfahrzeug erläutert, wenigstens eine Steuer- beziehungsweise Verarbeitungseinrichtung genutzt werden. Hierbei kann es sich insbesondere jeweils um eine programmierbare Datenverarbeitungseinrichtung, beispielsweise um einen Mikroprozessor oder FPGA, mit entsprechender Programmierung handeln.

Weitere Vorteile und Einzelheiten der Erfindung ergeben sich aus den folgenden Ausführungsbeispielen sowie den zugehörigen Zeichnungen. Hierbei zeigen schematisch:
- Figur 1: eine Detailansicht eines Ausführungsbeispiels eines erfindungsgemäßen Kraftfahrzeugs,
- Figur 2: relevante Datenstrukturen, die beim Betrieb des in Figur 1 gezeigten Kraftfahrzeugs beziehungsweise bei der Durchführung eines Ausführungsbeispiels des erfindungsgemäßen Verfahrens zur Ermittlung des Rückkoppeldrehmoments genutzt werden, und
- Figur 3: eine Detailansicht eines Rads des in Figur 1 gezeigten Kraftfahrzeugs einschließlich des dort angeordneten Radsensors.

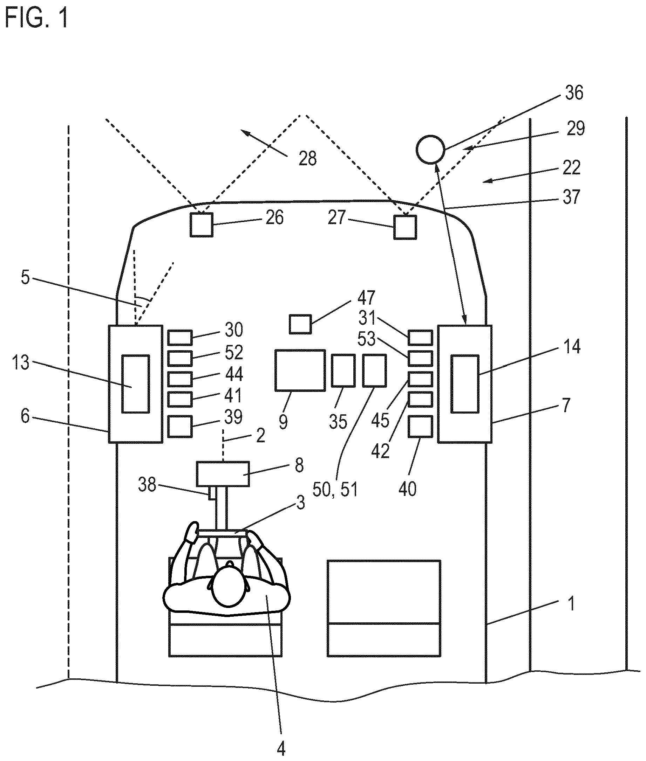

Fig. 1 zeigt ein Kraftfahrzeug 1 mit einem Steer-by-Wire-System, bei dem ein Lenkmittel 3 nicht unmittelbar hydraulisch mit den gelenkten Rädern 6, 7 gekoppelt ist, sondern die Stellung bzw. der Lenkwinkel 5 der Räder 6, 7 statt dessen in Abhängigkeit eines über einen Lenkwinkelsensor 38 erfassten Solllenkwinkels durch jeweilige Aktoren 39, 40 an den Rädern 6, 7 eingestellt wird.

Um einem Fahrer 4 eine Rückkopplung über auf die Räder 6, 7 wirkende Lenkkräfte beziehungsweise -momente zu geben, die beispielsweise aufgrund eines Nachlaufs der Räder 6, 7 bei einem Lenkwinkel ungleich Null auftreten, wird ein Rückkoppelaktor 8 durch eine Steuereinrichtung 9 in Abhängigkeit von Rückkoppeldaten angesteuert, um das Lenkmittel 3 mit einem Rückkoppeldrehmoment bezüglich der Lenkachse 2 zu beaufschlagen.

In einer alternativen, nicht dargestellten Ausführungsform könnte statt einem Steer-by-Wire-System jedoch auch eine elektromechanische Lenkung verwendet werden, bei der, wie bereits im allgemeinen Teil erläutert, die Nutzung eines Rückkoppelaktors mit der im Folgenden erläuterten Steuerung ebenfalls zweckmäßig sein kann.

In üblichen Steer-by-Wire-Systemen bzw. elektromechanischen Lenkungen werden als Rückkoppeldaten 11 primär über einen jeweiligen Lenkwinkelsensor 41, 42 erfasste Lenkwinkeldaten 43 verwendet, die den aktuellen tatsächlichen Lenkwinkel 5 des jeweiligen Rades 6, 7 betreffen. Wie bereits im allgemeinen Teil diskutiert wurde, kann dies jedoch dazu führen, dass Kraft- beziehungsweise Momenteinträge an den Rädern 6, 7 aufgrund der Trägheit der Räder beziehungsweise der Lenkmechanik erst mit einer gewissen Verzögerung zum Lenkmittel 3 rückgekoppelt werden, beziehungsweise dass hochfrequente Störungen beziehungsweise scharfe Transienten stark gedämpft werden.

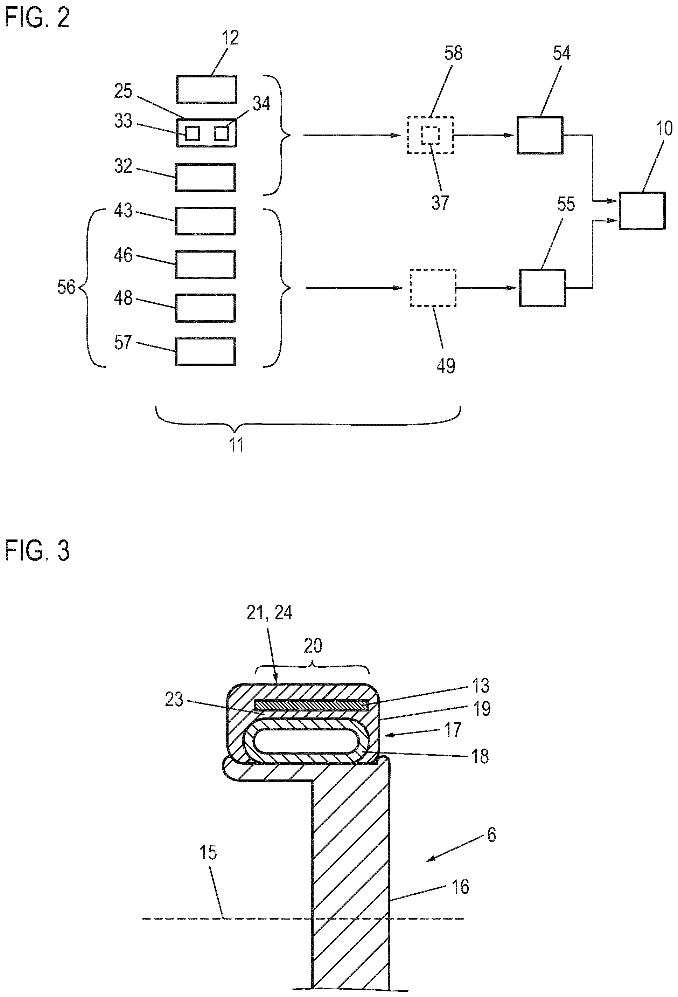

Eine solche verzögerte beziehungsweise eher träge Rückkopplung wird insbesondere bei einem gewünschten sportlichen Fahren beziehungsweise bei Fahrten im Grenzbereich des Kraftfahrzeugs 1 von Fahrern 4 häufig als störend empfunden. Daher werden im Kraftfahrzeug 1 zur Vorgabe von Rücckoppeldrehmomenten durch den Rückkoppelaktor 8 alternative beziehungsweise zusätzliche Eingangsgrößen genutzt. Dies beziehungsweise das hierbei ausgeführte Verfahren wird im Folgenden mit zusätzlichem Bezug auf Fig. 2 erläutert, die zur Ermittlung des Rückkoppeldrehmoments 10 relevante Datenstrukturen zeigt.

Es wurde erkannt, dass scharfe Transienten beziehungsweise hochfrequente Änderungen von Momenteinträgen an den Rädern 6, 7, die an das Lenkmittel 3 rückgekoppelt werden sollen, insbesondere durch zwei Ansätze rechtzeitig zur Rückkoppeldrehmomentbereitstellung am Lenkmittel 3 genutzt werden können. Einerseits kann der Übertragungsweg entsprechender Kräfte beziehungsweise Momente ausgehend von der Fahrbahn 22 verkürzt werden, indem als Rückkoppeldaten 11 Radsensordaten 12 eines jeweiligen in oder an wenigstens einem der Räder 6, 7 angeordneten Radsensors 13, 14 ausgewertet werden. Im Gegensatz zu Lenkwinkelsensoren, die einen Teil der Lenkmechanik bilden, können Kraft- beziehungsweise Momenteinträge somit unmittelbar am jeweiligen Rad 6, 7 erfasst werden, wodurch eine Bedämpfung beziehungsweise Verschleifung von Transienten beziehungsweise eine Verzögerung der Erfassung durch die Trägheit des Lenksystems vermieden werden kann. Wie später noch mit Bezug auf Fig. 3 erläutert werden wird, können insbesondere unmittelbar Verformungen beziehungsweise Krafteinwirkungen auf den Reifen 17 des jeweiligen Rades 6, 7 erfasst und ausgewertet werden, wodurch auch eine Bedämpfung der Kraft- beziehungsweise Momenteinträge durch die Trägheit weitere Komponenten des jeweiligen Rads 6, 7, also insbesondere der Felge 16 beziehungsweise der von der Fahrbahn abgewandten Teile des Reifens 17, weitgehend vermieden werden kann.

Alternativ beziehungsweise, wie im Beispiel, ergänzend können als Teil der Rückkoppeldaten 11 beziehungsweise als Grundlage von Verarbeitungsdaten 58, die Teil der Rückkoppeldaten 11 sind, auch Fahrbahnsensordaten 25 von Fahrbahnsensoren 26, 27 verwendet werden. Die Fahrbahnsensoren 26, 27 dienen zur kontaktlosen Erfassung eines jeweiligen Abschnitts 28, 29 der Fahrbahn 22 vor dem Kraftfahrzeug 1. Im Beispiel werden als Fahrbahnsensoren 26, 27 Time-of-Flight-Kameras verwendet, die Bilddaten 33 mit den einzelnen Bildpunkten zugeordnete Tiefeninformationen 34 bereitstellen. Alternativ könnten beispielsweise übliche Kameras, Radarsensoren, Laserscanner oder Ähnliches genutzt werden. Je nach Bildgebungsbereich der Fahrbahnsensoren 26, 27 kann es auch ausreichen, nur einen Fahrbahnsensor 26, 27 zu nutzen oder es können auch mehr als zwei Fahrbahnsensoren genutzt werden.

Die Verarbeitung von Bilddaten 33 beziehungsweise allgemein der kontaktlos erfassten Fahrbahnsensordaten 25 kann zu einer gewissen Verzögerung zwischen der Datenerfassung und der Bereitstellung eines hieraus resultierenden Rückkoppeldrehmoments 10 führen. Da jedoch relevante Fahrbahnmerkmale 36, beispielsweise Unebenheiten oder auf der Fahrbahn 22 liegende Gegenstände, beispielsweise Steine, aufgrund der kontaktlosen Erfassung des Fahrzeugumfelds bereits als Teil der Fahrbahnsensordaten 25 erfasst werden, bevor ein Rad 6, 7 in Kontakt mit diesen Fahrbahnmerkmalen 36 kommt, kann diese Verzögerung ausgeglichen werden, so dass ein Rückkoppeldrehmoment aufgrund eines Fahrbahnmerkmals 36 genau zu dem Zeitpunkt ausgespielt werden kann, zudem dieses voraussichtlich eines der Räder 6, 7 kontaktiert. Fahrbahnmerkmale 36, die auf Basis der Fahrbahnsensordaten 25 erkannt werden, können somit im Ergebnis verzögerungsfrei, wenn sie eines der Räder 6, 7 kontaktieren, an den Fahrer 4 kommuniziert werden, indem entsprechend Rückkoppeldrehmomente 10 durch den Rückkoppelaktor 8 auf das Lenkmittel 3 übertragen werden.

Prinzipiell könnten die Fahrbahnsensordaten 25 unmittelbar als Rückkoppeldaten 11 an die Steuereinrichtung 9 bereitgestellt und dort verarbeitet werden. Zur Verarbeitung von Bilddaten kann jedoch die Nutzung spezieller Schaltkreise, beispielsweise eines Grafikprozessors, vorteilhaft sein, so dass im Beispiel zumindest die Fahrbahnsensordaten 25, vorzugsweise jedoch auch die Radsensordaten 12, die Lenkwinkeldaten 43 und weitere, später noch diskutierte, Eingangsdaten durch eine Verarbeitungseinrichtung 35 vorverarbeitet werden und hieraus resultierende Verarbeitungsdaten 58 beziehungsweise weitere Verarbeitungsdaten 49 an die Steuereinrichtung bereitgestellt werden.

Die Vorverarbeitung kann insbesondere dazu dienen, durch Auswertung der Bilddaten 33 und/oder der Tiefeninformation 34 Fahrbahnmerkmale 36, insbesondere Unebenheiten, der Fahrbahn 22 zu erkennen und ihre Position 37 bezüglich wenigstens eines der Räder 6, 7 zu ermitteln. Ansätze zum Erkennen bestimmter Merkmale in Bilddaten sind im Stand der Technik bekannt und sollen daher nicht detailliert erläutert werden. Beispielsweise kann eine skaleninvariante Merkmalstransformation, ein gradientenbasierter Ansatz zur Merkmalserkennung oder auch ein geeignet trainierter Algorithmus des Maschinenlernens, beispielsweise ein trainiertes neuronales Netz, zur Erkennung und Lokalisierung der Fahrbahnmerkmale 36 genutzt werden.

Die relative Anordnung der Fahrbahnsensoren 26, 27 und der Räder 6, 7 zueinander ist bekannt beziehungsweise kann, beispielsweise im Rahmen der Endabnahme des Kraftfahrzeugs 1 beziehungsweise einer Wartung, durch Kalibrierung festgelegt werden. Bei Nutzung von Bilddaten 33 mit zugeordneter Tiefeninformation 34 kann somit unmittelbar die Position 37 des erkannten Fahrbahnmerkmals 36 bezüglich des jeweiligen Rades 6, 7 ermittelt werden. Ist eine Tiefeninformation 34 nicht bekannt, kann durch übliche Ansätze die Lage der Ebene der Fahrbahn 22 bezüglich des Kraftfahrzeugs 1 zusätzlich herangezogen werden, um auf Basis des Raumwinkels, innerhalb dem das entsprechende Fahrbahnmerkmal 36 erkannt wurde, dessen Position bezüglich des Kraftfahrzeugs 1 und somit bezüglich der Räder 6, 7 zu ermitteln.

Kleinere Unebenheiten der Fahrbahn 22, wie sie beispielsweise auf rauem Asphalt oder Schotter auftreten, würden bei einer mechanischen beziehungsweise hydraulischen Kopplung zwischen einem Lenkmittel 3 und Rad 6, 7 ebenfalls zum Lenkmittel 3 übertragen, womit dem Fahrer 4 zusätzliche Informationen über die Untergrundbeschaffenheit bereitgestellt würden. Entsprechende Vibrationen können relativ hochfrequent sein und werden daher in üblichen Steer-by-Wire-Systemen bzw. elektromechanischen Lenkungen, die beispielsweise nur die Lenkwinkeldaten 43 auswerten, im Wesentlichen nicht zum Lenkmittel 3 übertragen.

Eine Erfassung kleinerer Unebenheiten über Radsensoren 13, 14 beziehungsweise Fahrbahnsensoren 26, 27 wäre relativ aufwendig und nicht notwendigerweise in allen Fahrsituationen robust möglich. Daher werden im Kraftfahrzeug 1 zusätzlich Mikrofone 30, 31 genutzt, die zur Erfassung der Laufgeräusche der Rädere 6, 7 geeignet angeordnet und eingerichtet sind. Beispielsweise können die Mikrofone 30, 31 im Bereich des Unterbodens und relativ nahe an den Rädern 6, 7 angeordnet sein. Durch die Mikrofone 30, 31 wird ein Audiosignal 32 erfasst, dessen Frequenzzusammensetzung durch die Unebenheiten der Fahrbahn 22 und deren Zusammenwirken mit dem jeweiligen Rad 6, 7 geprägt ist.

Im einfachsten Fall kann das Audiosignal 32 genutzt werden, um ein entsprechendes Frequenzspektrum einem zusätzlichen Rauschanteil des Rückkoppeldrehmoments 10 aufzuprägen. Alternativ wäre es beispielsweise auch möglich, auf Basis des Audiosignals den befahrenen Untergrund, beispielsweise mit Hilfe eines Verfahrens des Maschinenlernens, zu klassifizieren und diese Klassifikation im Rahmen der Ermittlung des Rückkoppeldrehmoments 10 zu berücksichtigen oder Ähnliches.

Wie obig bereits detailliert erläutert wurde, sind die Radsensordaten 12, die Fahrbahnsensordaten 25 und die Audiosignale 32 gut geeignet, um schnelle, hochfrequente und/oder plötzliche Moment- beziehungsweise Krafteinträge an den Rädern 6, 7 in ein geeignetes Rückkoppeldrehmoment 10 umzusetzen. Zur Bereitstellung von niederfrequenten beziehungsweise langsam veränderlichen Anteilen des Rückkoppeldrehmoments 10 kann es hingegen vorteilhaft sein, zusätzlich die bereits erläuterten Lenkwinkeldaten 43 und/oder weitere Zusatzinformationen 56 heranzuziehen.

Da die Auswertung der Zusatzinformationen 56 nur zu niederfrequenten Änderungen des Rückkoppeldrehmoments 10 führen soll, kann es vorteilhaft sein, zur Verarbeitung der Zusatzinformationen 56 einerseits und zur Verarbeitung der Radsensordaten 12, der Fahrbahnsensordaten 25 und des Audiosignals 32 andererseits, separate Verarbeitungs- beziehungsweise Rücckoppelpfade zu nutzen, wie schematisch in Fig. 2 dargestellt ist. Hierbei kann im jeweiligen Verarbeitungspfad optional eine Vorverarbeitung der Eingangsdaten zu jeweiligen Verarbeitungsdaten 49, 58, beispielsweise durch die Verarbeitungseinrichtung 35, erfolgen, wonach durch die Steuereinrichtung 9 beziehungsweise eine jeweilige Teilesteuereinrichtung für jeden der beiden Rückkoppelpfade ein Teilmoment 54, 55 bereitgestellt wird. Die Teilmomente 54, 55 können zum Rückkoppeldrehmoment 10 addiert werden. Optional kann vor der Addition jedoch eine Filterung des jeweiligen Teilmoments 54, 55 erfolgen, wobei insbesondere eine Hochpassfilterung des Teilmoments 54 und/oder eine Tiefpassfilterung des Teilmoments 55 erfolgen kann.

Als Zusatzinformationen 56 werden im Beispiel neben den Lenkwinkeldaten 43 die folgenden Größen herangezogen: Durch einen jeweiligen Federungssensor 44, 45 wird ein Parameter 46 der Federung, im Beispiel der Höhenstand, ermittelt. Zudem wird über den Beschleunigungssensor 47 die Beschleunigung 48 des Kraftfahrzeugs erfasst. Ergänzend wird wenigstens eine Assistenzinformation 57 berücksichtigt, die durch wenigstens ein Fahrerassistenzsystem 50 des Kraftfahrzeugs bereitgestellt wird. Im Beispiel ist das Fahrerassistenzsystem 50 eine elektronische Stabilitätskontrolle, die als Komponenten 52, 53 Drehzahlsensoren und als Komponente 51 eine Verarbeitungseinrichtung zur Ermittlung eines Schlupfes auf Basis der durch die Drehzahlsensoren erfassten Raddrehzahlen umfasst.

Die Assistenzinformation 57 kann unmittelbar durch die Komponenten 52, 53, also durch die Sensoren, bereitgestellt werden, vorzugsweise erfolgt jedoch eine Bereitstellung von bereits verarbeiteten Daten durch die das Fahrerassistenzsystem 50 implementierende Verarbeitungseinrichtung. Die Relevanz der verschiedenen genutzten Zusatzinformationen 56 wurde bereits im allgemeinen Teil detailliert erläutert und soll hier nicht wiederholt werden.

Wie bereits mit Bezug auf Fig. 1 erläutert wurde, sollen die Radsensoren 13, 14 insbesondere eine möglichst unmittelbare Erfassung von auf das jeweilige Rad 6, 7 erwirkenden Kräften beziehungsweise Momenten ermöglichen. Eine diesbezüglich besonders vorteilhafte Ausgestaltung wird im Folgenden am Beispiel des Rades 6 beziehungsweise des Radsensors 13 mit Bezug auf Fig. 3 näher erläutert.

Das Rad 6 ist im gezeigten Beispiel durch eine Felge 16 und einen die Felge 16 umgreifenden Reifen 17 gebildet. Der Reifen 17 umfasst im Beispiel einen Mantel 19 und einen den Mantel 19 gegen die Felge 16 abstützenden Schlauch 18. Der Radsensor 13 ist ein piezoelektrischer Sensor, der in eine zur Kontaktierung der Fahrbahn 22 dienende radiale Außenwand 23 des Reifens 17 eingebettet ist. Alternativ könnte der Radsensor 13 beispielsweise an der Innenfläche der Außenwand 23 angeordnet sein, wobei in diesem Fall vorzugsweise eine zusätzliche Abdeckung genutzt wird, um eine Beschädigung des Radsensors 13 durch eine Reibung zwischen Schlauch 18 und Mantel 19 zu verhindern.

Eine auf die Außenwand 23 beziehungsweise deren Außenfläche 24, die die Lauffläche 21 des Reifens 17 bildet, wirkende Kraft führt zu einer Komprimierung des Radsensors 13 in Vertikalrichtung in Fig. 3 und somit zu einem Spannungsabfall am piezoelektrischen Sensor. Eine Verformung der Außenwand 23 führt zudem zu einer Scherung des piezoelektrischen Sensors und somit ebenfalls zu einem Spannungsabfall.

Somit kann eine Kraft- beziehungsweise Momentbeaufschlagung des Rads 6 seitens der Fahrbahn 22, da diese notwendig über den Reifen 17 eines Rads 6 eingekoppelt wird, ohne eine Bedämpfung durch andere träge Komponenten, beispielsweise die Felge 16 beziehungsweise eine Lenkmechanik, erfasst werden, womit die Eingangs erläuterten Verzögerungen beziehungsweise die Bedämpfung von hohen Frequenzen und scharfen Transienten vermieden werden kann. Die Erfassung einer Verformung des Abschnitts 20 der Lauffläche 21 des Reifens 17 beziehungsweise einer dort wirkenden Kraft ist somit gut geeignet, einen Rückkoppeldrehmoment 10 bereitzustellen.

Im einfachsten Fall kann sich der Radsensor 13 in Fig. 3 in Umfangsrichtung im Wesentlichen vollständig um die Rotationsachse 15 des Rads 6 erstrecken und, wie gezeigt, sich im Wesentlichen über die gesamte Breite des Reifens 17 erstrecken. Um jedoch beispielsweise unterscheiden zu können, ob das Rad 6 beziehungsweise der Reifen 17 eine Unebenheit 36 an seinem vorderen beziehungsweise hinteren Ende beziehungsweise an seiner Innen- oder Außenseite kontaktiert, kann es vorteilhaft sein, den Radsensor 16 beziehungsweise die piezoelektrischen Sensorelemente in Umfangsrichtung des Rads 6 beziehungsweise in Axialrichtung der Rotationsachse 15 zu segmentieren.

## Patentansprüche

1. Kraftfahrzeug mit einem um eine Lenkachse (2) drehbar gelagerten Lenkmittel (3), durch dessen Betätigung durch den Fahrer (4) des Kraftfahrzeugs (1) der Lenkwinkel (5) wenigstens eines der Räder (6, 7) des Kraftahrzeugs (1) veränderbar ist, einem Rückkoppelaktor (8) und einer Steuereinrichtung (9), wobei das Lenkmittel (3) durch den Rückkoppelaktor (8) mit einem Rückkoppeldrehmoment (10) bezüglich der Lenkachse (2) beaufschlagbar ist, wobei die Steuereinrichtung (9) dazu eingerichtet ist, das Rückkoppeldrehmoment (10) in Abhängigkeit von an die Steuereinrichtung (9) bereitgestellten Rückkoppeldaten (11) vorzugeben, wobei die Rückkoppeldaten (11) Radsensordaten (12) wenigstens eines jeweiligen in oder an wenigstens einem der Räder (6, 7) angeordneten Radsensors (13, 14) des Kraftfahrzeugs (1) und/oder in Abhängigkeit der Radsensordaten (12) ermittelte Verarbeitungsdaten (58) sind oder umfassen, wobei der jeweilige Radsensor (13, 14) dazu eingerichtet ist, eine Verformung zumindest eines Abschnitts (20) eines eine Felge (16) des jeweiligen Rades (6, 7) umgreifenden Reifens (17) und/oder eine Kraft, die auf eine zur Kontaktierung der Fahrbahn (22) dienende Lauffläche (21) des Reifens (17) wirkt, zu erfassen,
**dadurch gekennzeichnet,**
**dass** zur Ermittlung der Rückkoppeldaten (11) mehrere Radsensoren (13, 14) in Umfangsrichtung des jeweilen Rads (6, 7) genutzt werden.

2. Kraftfahrzeug nach Anspruch 1,
**dadurch gekennzeichnet,**
**dass** der Radsensor (13, 14) ein piezoelektrischer Sensor ist, der in eine zur Kontaktierung der Fahrbahn (22) dienende radiale Außenwand (23) des oder eines die oder eine Felge (16) des jeweiligen Rades (6, 7) umlaufenden Reifens (17) eingebettet ist oder an deren Innenfläche angeordnet ist.

3. Kraftfahrzeug nach einem der vorangehenden Ansprüche,
**dadurch gekennzeichnet,**
**dass** das Kraftfahrzeug (1) ein Mikrophon (30, 31) umfasst, das insbesondere zur Erfassung eines Laufgeräusch wenigstens eines der Räder (6, 7) geeignet angeordnet und eingerichtet ist, wobei die Rückkoppeldaten (11) zusätzlich ein durch das Mikrofon (30, 31) erfasstes Audiosignal (32) oder in Abhängigkeit des Audiosignals (32) ermittelte weitere Verarbeitungsdaten (31) umfassen und/oder wobei die Verarbeitungsdaten (58) zusätzlich von dem Audiosignal (32) abhängen.

4. Kraftfahrzeug nach einem der vorangehenden Ansprüche,
**dadurch gekennzeichnet,**
**dass** die Rückkoppeldaten (11) zusätzlich Fahrbahnsensordaten (25) wenigstens eines Fahrbahnsensors (26, 27) des Kraftfahrzeugs (1), der zur kontaktlosen Erfassung eines Abschnitt (28, 29) der durch das Kraftfahrzeug (1) befahrenen Fahrbahn (22) eingerichtet ist, umfassen und/oder dass die Verarbeitungsdaten (58) zusätzlich in Abhängigkeit der Fahrbahnsensordaten (25) ermittelt sind.

5. Kraftfahrzeug nach Anspruch 4,
**dadurch gekennzeichnet,**
**dass** der Fahrbahnsensor (26, 27) einerseits ein bildgebender Sensor ist, durch den den Abschnitt (28, 29) der Fahrbahn (22) abbildende Bilddaten (33) bereitgestellt werden, und/oder andererseits wenigstens eine Tiefeninformation (34) bezüglich des abgebildeten Abschnitts (28, 29) der Fahrbahn (22) bereitstellt, wobei die Fahrbahnsensordaten (25) die Bilddaten (33) und/oder die Tiefeninformation (34) umfassen oder von den Bilddaten (33) und/oder der Tiefeninformation (34) abhängen.

6. Kraftfahrzeug nach Anspruch 5,
**dadurch gekennzeichnet,**
**dass** die Steuereinrichtung (9) oder eine die Verarbeitungsdaten (58) bereitstellende Verarbeitungseinrichtung (35) des Kraftfahrzeugs (1) dazu eingerichtet ist, durch Auswertung der Bilddaten (33) und/oder der Tiefeninformation (34) wenigstens ein Fahrbahnmerkmal (36), insbesondere eine Unebenheit, der Fahrbahn (22) zu erkennen und seine Position (37) bezüglich wenigstens eines der Räder (6, 7) zu ermitteln, wobei der zeitliche Verlauf des Rückkoppeldrehmoments (10) von der ermittelten Position (37) abhängt.

7. Kraftfahrzeug nach Anspruch 5 oder 6,
**dadurch gekennzeichnet,**
**dass** der Fahrbahnsensor (26, 27) eine Kamera, insbesondere eine Time-of-Flight-Kamera und/oder eine Infrarotkamera, oder ein Laserscanner oder ein Radarsensor oder ein Ultraschallsensor ist.

8. Kraftfahrzeug nach einem der vorangehenden Ansprüche,
**dadurch gekennzeichnet,**
**dass** es einen Lenkwinkelsensor (41, 42) zur Erfassung von den Lenkwinkel (5) wenigstens eines der Räder (6, 7) betreffenden Lenkwinkeldaten (43) und/oder einen Federungssensor (44, 45) zur Erfassung wenigstens eines Parameters (46) der Federung, insbesondere eines Höhenstandes der Federung, und/oder einen Beschleunigungssensor (47) zur Erfassung einer Beschleunigung (48) des Kraftfahrzeugs (1) umfasst, wobei die Rückkoppeldaten (11) die Lenkwinkeldaten (43) und/oder den Parameter (46) der Federung und/oder die Beschleunigung (48) des Kraftfahrzeugs (1) und/oder von den Lenkwinkeldaten (43) und/oder dem Parameter (46) der Federung und/oder der Beschleunigung (48) des Kraftfahrzeugs abhängende weitere Verarbeitungsdaten (49) umfassen und/oder wobei die Verarbeitungsdaten (58) von den Lenkwinkeldaten (43) und/oder dem Parameter (46) der Federung und/oder der Beschleunigung (48) des Kraftfahrzeugs (1) abhängen.

9. Kraftfahrzeug nach einem der vorangehenden Ansprüche,
**dadurch gekennzeichnet,**
**dass** es wenigstens ein Fahrerassistenzsystem (50), insbesondere eine elektronische Stabilitätskontrolle, umfasst, wobei die Rückkoppeldaten (11) wenigstens eine durch eine Komponente (51-53) des Fahrerassistenzsystems (50) bereitgestellte Assistenzinformation (57), die insbesondere einen Schwimmwinkel des Kraftfahrzeugs (1) und/oder einen Schlupf wenigstens eines Rades (6, 7) des Kraftfahrzeugs (1) betrifft, und/oder von der Assistenzinformation (57) abhängende weitere Verarbeitungsdaten (49) umfassen, und/oder wobei die Verarbeitungsdaten (58) von der Assistenzinformation (57) abhängen.

10. Kraftfahrzeug nach einem der vorangehenden Ansprüche, **dadurch gekennzeichnet, dass** die Steuereinrichtung (9) oder eine jeweilige Teileinrichtung der Steuereinrichtung (9) dazu eingerichtet ist, ein erstes Teilmoment (54) in Abhängigkeit der Radsensordaten (12) und/oder der Fahrbahnsensordaten (25) und/oder der in Abhängigkeit der Radsensordaten (12) und/oder der Fahrbahnsensordaten (25) ermittelten Verarbeitungsdaten (58) und ein zweites Teilmoment (55) in Abhängigkeit einer durch eine weitere Fahrzeugkomponente bereitgestellten Zusatzinformation (56) zu ermitteln, wobei die Steuereinrichtung (9) dazu eingerichtet ist, das Rückkoppeldrehmoment (10) als Summe des, insbesondere gefilterten, ersten Teilmoments (54) und des, insbesondere gefilterten, zweiten Teilmoments (55) vorzugeben.

11. Verfahren zur Bereitstellung eines Rückkoppeldrehmoments (10) für ein um eine Lenkachse (2) drehbar gelagertes Lenkmittel (3) eines Kraftfahrzeugs (1), wobei durch Betätigung des Lenkmittels (3) durch den Fahrer (4) des Kraftfahrzeugs (1) der Lenkwinkel (5) wenigstens eines der Räder (6, 7) des Kraftahrzeugs (1) verändert wird, wobei das Lenkmittel (4) durch einen Rückkoppelaktor (8) des Kraftfahrzeugs (1) mit einem Rückkoppeldrehmoment (10) bezüglich der Lenkachse (2) beaufschlagt wird, wobei das Rückkoppeldrehmoment (10) in Abhängigkeit von Rückkoppeldaten vorgegeben wird, wobei die Rückkoppeldaten (10) Radsensordaten (12) wenigstens eines jeweiligen in oder an wenigstens einem der Räder (6, 7) angeordneten Radsensors (13, 14) des Kraftfahrzeugs (1) und/oder in Abhängigkeit der Radsensordaten (12) ermittelte Verarbeitungsdaten (58) sind oder umfassen, wobei der jeweilige Radsensor (13, 14) eine Verformung zumindest eines Abschnitts (20) eines eine Felge (16) des jeweiligen Rades (6, 7) umgreifenden Reifens (17) und/oder eine Kraft, die auf eine zur Kontaktierung der Fahrbahn (22) dienende Lauffläche (21) des Reifens (17) wirkt, erfasst,
**dadurch gekennzeichnet,**
**dass** zur Ermittlung der Rückkoppeldaten (11) mehrere Radsensoren (13, 14) in Umfangsrichtung des jeweilen Rads (6, 7) genutzt werden.

## Claims

1. Motor vehicle with a steering means (3) rotatably mounted about a steering axle (2), by which when actuated by the driver (4) of the motor vehicle (1) the steering angle (5) of at least one of the wheels (6, 7) of the motor vehicle (1) can be changed, a feedback actuator (8) and a control apparatus (9), wherein the steering means (3) can be acted upon by the feedback actuator (8) with a feedback torque (10) relative to the steering axle (2), wherein the control apparatus (9) is configured to prespecify the feedback torque (10) as a function of the feedback data (11) supplied to the control apparatus (9), wherein the feedback data (11) is or comprises wheel sensor data (12) from at least one respective wheel sensor (13, 14) of the motor vehicle (1) arranged in or on at least one of the wheels (6, 7) and/or processing data (58) determined as a function of the wheel sensor data (12), wherein the respective wheel sensor (13, 14) is configured to detect a deformation of at least one section (20) of a tire (17) surrounding a rim (16) of the respective wheel (6, 7) and/or a force acting on a tread (21) of the tire (17) for contacting the road (22),
**characterized in that** multiple wheel sensors (13, 14) are used in the circumferential direction of the respective wheel (6, 7) to determine the feedback data (11).

2. Motor vehicle according to claim 1,
**characterized in that**
the wheel sensor (13, 14) is a piezoelectric sensor which is embedded in a radial outer wall (23) of the tire (17) surrounding the rim or a rim (16) of the respective wheel (6, 7) and for contacting the road (22), or is arranged on the inner surface thereof.

3. Motor vehicle according to any one of the preceding claims,
**characterized in that**
the motor vehicle (1) comprises a microphone (30, 31) which is arranged and configured in particular for detecting a running noise of at least one of the wheels (6, 7), wherein the feedback data (11) additionally comprises an audio signal (32) detected by the microphone (30, 31) or further processing data (31) determined as a function of the audio signal (32), and/or wherein the processing data (58) additionally depend on the audio signal (32).

4. Motor vehicle according to any one of the preceding claims,
**characterized in that**
the feedback data (11) additionally includes road sensor data (25) from at least one road sensor (26, 27) of the motor vehicle (1), which is configured for contactless detection of a section (28, 29) of the road (22) traveled on by the motor vehicle (1), and/or in that the processing data (58) is additionally determined as a function of the road sensor data (25).

5. Motor vehicle according to claim 4,
**characterized in that**
the road sensor (26, 27) is, on the one hand, an imaging sensor which provides image data (33) representing the section (28, 29) of the road (22) and/or, on the other hand, provides at least one piece of depth information (34) relating to the imaged section (28, 29) of the road (22), wherein the road sensor data (25) include the image data (33) and/or the depth information (34) or depend on the image data (33) and/or the depth information (34).

6. Motor vehicle according to claim 5,
**characterized in that**
the control apparatus (9) or a processing apparatus (35) of the motor vehicle (1) that provides the processing data (58) is configured to detect at least one road feature (36), in particular an unevenness, of the road (22) by evaluating the image data (33) and/or the depth information (34) and to determine its position (37) relative to at least one of the wheels (6, 7), wherein the temporal course of the feedback torque (10) depends on the determined position (37).

7. Motor vehicle according to claim 5 or 6,
**characterized in that**
that the road sensor (26, 27) is a camera, in particular a time-of-flight camera and/or an infrared camera, or a laser scanner or a radar sensor or an ultrasonic sensor.

8. Motor vehicle according to any one of the preceding claims,
**characterized in that**
it comprises a steering angle sensor (41, 42) for detecting steering angle data (43) relating to the steering angle (5) of at least one of the wheels (6, 7) and/or a suspension sensor (44, 45) for detecting at least one parameter (46) of the suspension, in particular a height position of the suspension, and/or an acceleration sensor (47) for detecting an acceleration (48) of the motor vehicle (1), wherein the feedback data (11) include the steering angle data (43) and/or the parameter (46) of the suspension and/or the acceleration (48) of the motor vehicle (1) and/or further processing data (49) dependent on the steering angle data (43) and/or the parameter (46) of the suspension and/or the acceleration (48) of the motor vehicle and/or wherein the processing data (58) depend on the steering angle data (43) and/or the parameter (46) of the suspension and/or the acceleration (48) of the motor vehicle (1).

9. Motor vehicle according to any one of the preceding claims,
**characterized in that**
it comprises at least one driver assistance system (50), in particular an electronic stability control system, wherein the feedback data (11) comprises at least one item of assistance information (57) provided by a component (51-53) of the driver assistance system (50), which in particular relates to a side slip angle of the motor vehicle (1) and/or a slip of at least one wheel (6, 7) of the motor vehicle (1), and/or further processing data (49) dependent on the assistance information (57), and/or wherein the processing data (58) depend on the assistance information (57).

10. Motor vehicle according to any one of the preceding claims, **characterized in that** the control apparatus (9) or a respective sub-apparatus of the control apparatus (9) is configured to determine a first partial torque (54) as a function of the wheel sensor data (12) and/or the road sensor data (25) and/or the processing data (58) determined as a function of the wheel sensor data (12) and/or the road sensor data (25) and a second partial torque (55) as a function of additional information (56) provided by a further vehicle component, wherein the control apparatus (9) is configured to specify the feedback torque (10) as the sum of the first partial torque (54), in particular filtered, and the second partial torque (55), in particular filtered.

11. Method for providing a feedback torque (10) for a steering means (3) of a motor vehicle (1) rotatably mounted about a steering axle (2), wherein when the steering means (3) is actuated by the driver (4) of the motor vehicle (1) the steering angle (5) of at least one of the wheels (6, 7) of the motor vehicle (1) is changed, wherein the steering means (4) is acted on by a feedback torque (10) relative to the steering axle (2) by a feedback actuator (8) of the motor vehicle (1), wherein the feedback torque (10) is prespecified as a function of feedback data, wherein the feedback data (10) is or comprises wheel sensor data (12) from at least one respective wheel sensor (13, 14) of the motor vehicle (1) arranged in or on at least one of the wheels (6, 7) and/or processing data (58) determined as a function of the wheel sensor data (12), wherein the respective wheel sensor (13, 14) detects a deformation of at least one section (20) of a tire (17) surrounding a rim (16) of the respective wheel (6, 7) and/or a force acting on a running surface (21) of the tire (17) for contacting the road (22),
**characterized in that**
multiple wheel sensors (13, 14) are used in the circumferential direction of the respective wheel (6, 7) to determine the feedback data (11).

## Revendications

1. Véhicule automobile avec un moyen de direction (3) logé de manière rotative autour d'un essieu directeur (2), par l'actionnement duquel l'angle de direction (5) au moins d'une des roues (6, 7) du véhicule automobile (1) peut être modifié par le conducteur (4) du véhicule automobile (1), un actionneur de rétroaction (8) et un dispositif de commande (9), dans lequel le moyen de direction (3) peut être alimenté par l'actionneur de rétroaction (8) en un couple de rétroaction (10) par rapport à l'essieu directeur (2), dans lequel le dispositif de commande (9) est conçu afin de prédéfinir le couple de rétroaction (10) en fonction de données de rétroaction (11) fournies au dispositif de commande (9), dans lequel les données de rétroaction (11) sont et/ou comprennent des données de capteur de roue (12) au moins d'un capteur de roue (13, 14) respectif agencé dans ou au niveau d'au moins une des roues (6, 7) du véhicule automobile (1) et/ou sont ou comprennent des données de traitement (58) déterminées en fonction des données de capteur de roue (12), dans lequel le capteur de roue (13, 14) respectif est conçu afin de détecter une déformation au moins d'une section (20) d'un pneumatique (17) entourant une jante (16) de la roue (6, 7) respective et/ou une force qui agit sur une surface de roulement (21) du pneumatique (17) servant à la mise en contact avec la chaussée (22),
**caractérisé en ce que** pour la détermination des données de rétroaction (11), plusieurs capteurs de roue (13, 14) sont utilisés dans le sens périphérique de la roue (6, 7) respective.

2. Véhicule automobile selon la revendication 1,
**caractérisé en ce que**
le capteur de roue (13, 14) est un capteur piézoélectrique qui est intégré dans une paroi extérieure (23) radiale servant à la mise en contact avec la chaussée (22) du ou d'un pneumatique (17) entourant la ou une jante (16) de la roue (6, 7) respective ou est agencé au niveau de sa surface intérieure.

3. Véhicule automobile selon l'une quelconque des revendications précédentes, **caractérisé en ce que**
le véhicule automobile (1) comprend un microphone (30, 31) qui est agencé ou conçu de manière appropriée en particulier pour la détection d'un bruit de roulement au moins d'une des roues (6, 7), dans lequel les données de rétroaction (11) comprennent en outre un signal audio (32) détecté par le microphone (30, 31) ou d'autres données de traitement (31) déterminées en fonction du signal audio (32) et/ou dans lequel les données de traitement (58) dépendent en outre du signal audio (32).

4. Véhicule automobile selon l'une quelconque des revendications précédentes,
**caractérisé en ce que**
les données de rétroaction (11) comprennent en outre des données de capteur de chaussée (25) au moins d'un capteur de chaussée (26, 27) du véhicule automobile (1) qui est conçu pour la détection sans contact d'une section (28, 29) de la chaussée (22) parcourue par le véhicule automobile (1) et/ou **en ce que** les données de traitement (58) sont en outre déterminées en fonction des données de capteur de chaussée (25).

5. Véhicule automobile selon la revendication 4,
**caractérisé en ce que**
le capteur de chaussée (26, 27) est d'un côté un capteur de formage d'image, par lequel des données d'image (33) illustrant la section (28, 29) de la chaussée (22) sont fournies et/ou fournit de l'autre côté au moins une information de profondeur (34) par rapport à la section (28, 29) illustrée de la chaussée (22), dans lequel les données de capteur de chaussée (25) comprennent les données d'image (33) et/ou l'information de profondeur (34) ou dépendent des données d'image (33) et/ou de l'information de profondeur (34).

6. Véhicule automobile selon la revendication 5,
**caractérisé en ce que**
le dispositif de commande (9) ou un dispositif de traitement (35) fournissant les données de traitement (58) du véhicule automobile (1) est conçu afin de reconnaître par évaluation des données d'image (33) et/ou de l'information de profondeur (34) au moins une caractéristique de chaussée (36), en particulier une inégalité, de la chaussée (22) et de déterminer sa position (37) par rapport au moins à une des roues (6, 7), dans lequel l'étendue temporelle du couple de rétroaction (10) dépend de la position déterminée (37).

7. Véhicule automobile selon la revendication 5 ou 6,
**caractérisé en ce que**
le capteur de chaussée (26, 27) est une caméra, en particulier une caméra de temps de vol et/ou une caméra infrarouge ou un scanner laser ou un capteur radar ou un capteur à ultrasons.

8. Véhicule automobile selon l'une quelconque des revendications précédentes,
**caractérisé en ce que**
il comprend un capteur d'angle de direction (41, 42) pour la détection de données d'angle de direction (43) concernant l'angle de direction (5) au moins d'une des roues (6, 7) et/ou un capteur de suspension (44, 45) pour la détection d'au moins un paramètre (46) de la suspension, en particulier une hauteur de la suspension et/ou un capteur d'accélération (47) pour la détection d'une accélération (48) du véhicule automobile (1), dans lequel les données de rétroaction (11) comprennent les données d'angle de direction (43) et/ou le paramètre (46) de la suspension et/ou l'accélération (48) du véhicule automobile (1) et/ou d'autres données de traitement (49) dépendant des données d'angle de direction (43) et/ou du paramètre (46) de la suspension et/ou de l'accélération (48) du véhicule automobile et/ou dans lequel les données de traitement (58) dépendent des données d'angle de direction (43) et/ou du paramètre (46) de la suspension et/ou de l'accélération (48) du véhicule automobile (1).

9. Véhicule automobile selon l'une quelconque des revendications précédentes,
**caractérisé en ce que**
il comprend au moins un système d'aide à la conduite (50), en particulier un contrôle de stabilité électronique, dans lequel les données de rétroaction (11) comprennent au moins une information d'aide (57) fournie par un composant (51-53) du système d'aide à la conduite (50) qui concerne en particulier un angle de flottement du véhicule automobile (1) et/ou un patinage d'au moins une roue (6, 7) du véhicule automobile (1), et/ou d'autres données de traitement (49) dépendant de l'information d'aide (57) et/ou dans lequel les données de traitement (58) dépendent de l'information d'aide (57).

10. Véhicule automobile selon l'une quelconque des revendications précédentes, **caractérisé en ce que** le dispositif de commande (9) ou un dispositif partiel respectif du dispositif de commande (9) est conçu afin de déterminer un premier couple partiel (54) en fonction des données de capteur de roue (12) et/ou des données de capteur de chaussée (25) et/ou des données de traitement (58) déterminées en fonction des données de capteur de roue (12) et/ou des données de capteur de chaussée (25) et un second couple partiel (55) en fonction d'une information supplémentaire (56) fournie par un autre composant de véhicule, dans lequel le dispositif de commande (9) est conçu afin de prédéfinir le couple de rétroaction (10) comme somme du premier couple partiel (54) en particulier filtré et du second couple partiel (55) en particulier filtré.

11. Procédé de fourniture d'un couple de rétroaction (10) pour un moyen de direction (3) logé de manière rotative autour d'un essieu directeur (2) d'un véhicule automobile (1), dans lequel par l'actionnement du moyen de direction (3) par le conducteur (4) du véhicule automobile (1), l'angle de direction (5) au moins d'une des roues (6, 7) du véhicule automobile (1) est modifié, dans lequel le moyen de direction (4) est alimenté par un actionneur de rétroaction (8) du véhicule automobile (1) en un couple de rétroaction (10) par rapport à l'essieu directeur (2), dans lequel le couple de rétroaction (10) est prédéfini en fonction de données de rétroaction, dans lequel les données de rétroaction (10) sont ou comprennent des données de capteur de roue (12) au moins d'un capteur de roue (13, 14) respectif agencé dans ou au niveau d'au moins une des roues (6, 7) du véhicule automobile (1) et/ou sont ou comprennent des données de traitement (58) déterminées en fonction des données de capteur de roue (12), dans lequel le capteur de roue (13, 14) respectif détecte une déformation au moins d'une section (20) d'un pneumatique (17) entourant une jante (16) de la roue (6, 7) respective et/ou une force qui agit sur une surface de roulement (21) du pneumatique (17) servant à la mise en contact avec la chaussée (22),
**caractérisé en ce que**
pour la détermination des données de rétroaction (11), plusieurs capteurs de roue (13, 14) sont utilisés dans le sens périphérique de la roue (6, 7) respective.
